# EUROPÄISCHE PATENTSCHRIFT

(11) **EP 2 029 308 B1**
(45) Veröffentlichungstag und Bekanntmachung des Hinweises auf die Patenterteilung: **03.04.2013**
(21) Anmeldenummer: 07725152.8
(22) Anmeldetag: 12.05.2007
(51) Int. Cl.: B23K 3/06, B23K 3/08, H05K 3/34, F04D 29/60, F04D 7/06

(54) **LÖTVORRICHTUNG**
SOLDERING APPARATUS
DISPOSITIF DE BRASAGE

(30) Priorität: 19.05.2006 DE 102006023925
(43) Veröffentlichungstag der Anmeldung: 04.03.2009
(73) Patentinhaber: EBSO Maschinen- und Apparatebau GmbH, 76767 Hagenbach (DE)
(72) Erfinder: HÄSELER, Joachim, 76767 Hagenbach (DE); SOMMER, Eberhard, 76767 Hagenbach (DE)
(74) Vertreter: Lasch, Hartmut
(86) Internationale Anmeldenummer: PCT/EP2007/004232
(87) Internationale Veröffentlichungsnummer: WO 2007/134740

(56) Entgegenhaltungen:
- EP-A1- 0 009 681
- GB-A- 2 249 277
- JP-A- 1 143 762
- JP-A- 2000 208 927
- JP-A- 2006 093 282
- US-A- 4 375 270
- US-A- 5 170 912
- US-A- 6 000 916

## Beschreibung

Die Erfindung betrifft eine Lötvorrichtung gemäß dem Oberbegriff des Anspruchs 1.

Lötvorrichtungen des genannten Aufbaus sind allgemein bekannt und beispielsweise in der JP 2006-093282 A beschrieben. Um beispielsweise ein elektronisches Bauteil mit einer Leiterplatte zu verlöten, werden die zu verbindenden Bauteile nahe der Mündung einer Düse angeordnet, die über eine Leitung mit einem Pumpenkammergehäuse verbunden ist, in dem sich eine Lötflüssigkeit befindet, bei der es sich üblicherweise um erwärmtes Zinn handelt. Die in der Pumpenkammer des Pumpenkammergehäuses befindliche Lötflüssigkeit kann mittels einer Pumpe auf einen Überdruck gebracht werden, wodurch die Lötflüssigkeit an der Düse austritt und einen Schwall oder eine Welle bildet, wodurch die zu verbindenden Bauteile mit der Lötflüssigkeit benetzt werden. Nach Abkühlen der Lötflüssigkeit und dem Erstarren des Zinns sind die Bauteile fest miteinander verbunden.

Nach einem längeren Betrieb der Lötvorrichtung verschmutzt die Pumpe insbesondere durch Oxidationsprodukte des Zinns. Um einen ordnungsgemäßen Betrieb der Lötvorrichtung zu gewährleisten, ist es deshalb notwendig, die Pumpe in regelmäßigen Abständen auszubauen und zu reinigen. Zu diesem Zweck ist die Pumpe mittels einer lösbaren Schraubverbindung auf dem Pumpenkammergehäuse gehalten. Um die Pumpe auszubauen, müssen zunächst alle Schraubverbindungen gelöst werden. Dies ist zeitaufwendig und dadurch kostenintensiv, zumal die Pumpe sehr heiß ist, da sie in direktem Kontakt mit dem flüssigen Zinn bzw. der Lötflüssigkeit steht. Somit besteht beim Lösen der Schraubverbindung für den Benutzer eine hohe Verletzungsgefahr.

Aus der US 5 170 912 ist es bekannt, einen Pumpenkopf an einem Pumpengehäuse mittels eines sogenannten Bajonette-Verschlusses in lösbarer Weise anzubringen, wobei mehrere Haltenasen des Pumpenkopfes in formschlüssigen Eingriff mit Hinterschneidungen des Pumpengehäuses gebracht werden. Bei Verwendung dieser Verbindungsmethode bei einer gattungsgemäßen Lötvorrichtung besteht jedoch die Gefahr, dass sich die Verbindung aufgrund der hohen thermischen Belastungen verklemmt und verkeilt und sich nicht wieder lösen lässt.

Der Erfindung liegt die Aufgabe zugrunde, eine Lötvorrichtung der genannten Art zu schaffen, bei der sich die Pumpe schnell und in einfacher Weise ausbauen lässt.

Diese Aufgabe wird erfindungsgemäß mit einer Lötvorrichtung mit den kennzeichnenden Merkmalen des Anspruchs 1 gelöst. Dabei ist vorgesehen, dass die Pumpe zumindest eine Haltenase aufweist, mit der sie in formschlüssigen Eingriff mit einer Hinterschneidung eines am Pumpenkammergehäuse gehaltenen Halteteils bringbar ist, wobei das Halteteil unter Wirkung von zumindest einer Feder gegen das Pumpenkammergehäuse gespannt ist.

Das Halteteil bildet eine Hinterschneidung, in die die Haltenase der Pumpe eingeführt werden kann, so dass die Pumpe in formschlüssiger Weise an einer Entnahme aus der Lötvorrichtung gehindert ist. Vorzugsweise besitzt die Pumpe zumindest zwei Haltenasen, die insbesondere diametral gegenüberliegend zur Pumpenachse angeordnet sein können. Wenn mehr als zwei und insbesondere drei Haltenasen vorgesehen sind, sollten diese gleichmäßig über den Umfang der Pumpe verteilt sein.

Gemäß der Erfindung ist vorgesehen, dass das Halteteil lose auf dem Pumpenkammergehäuse aufliegt und unter Wirkung von zumindest einer Feder gegen das Pumpenkammergehäuse gespannt ist. Wenn die Pumpe mit ihrer Haltenase in den Zwischenraum bzw. die Ringnut zwischen dem Halteteil und dem Pumpenkammergehäuse eingeführt wird und längs der Ringnut verstellt wird, führt dies zu einem geringfügigen Abheben des Halteteils von dem Pumpenkammergehäuse entgegen der Kraft der Feder. Als Reaktion übt die Feder über das Halteteil auf die Haltenase der Pumpe eine Spannkraft aus, durch die eine Dichtfläche der Pumpe gegen eine Oberfläche des Pumpenkammergehäuses gespannt wird, wodurch eine zuverlässige Abdichtung der Pumpe gegenüber dem Pumpenkammergehäuse mit einer durch die Feder definierten Spannkraft erreicht ist. Die federnde Lagerung des Halteteils bringt darüber hinaus den Vorteil mit sich, dass eine Verkeilung der Haltenase in der Ringnut bzw. der Hinterschneidung nicht auftreten kann, so dass die Pumpe sich in einfacher Weise ausund einbauen lässt.

Vorzugsweise bildet das Halteteil eine sich über einen Teilbereich des Umfangs der Pumpe erstreckende Ringnut und besitzt eine Ausklinkung, an der die Haltenase in die Ringnut eingesetzt werden kann. Durch Verlagerung und insbesondere Drehung der Pumpe wird die Haltenase längs der Ringnut nach Art eines Bajonettverschlusses verschoben und dabei innerhalb der Ringnut verspannt, bis sie fest in dem Halteteil sitzt. In der verspannten Montagestellung kann die Pumpe durch ein spezielles Sicherungselement, insbesondere eine Rastung, gehalten sein. In bevorzugter Ausgestaltung der Erfindung ist jedoch vorgesehen, dass die Pumpe mittels einer Montagedrehung um ihre Pumpenachse mit dem Halteteil in Eingriff gebracht wird. Wenn die Richtung der Montagedrehung der Drehrichtung der Pumpe bei ihrem Betrieb entspricht, bewirken die bei Betrieb der Pumpe auftretenden Reaktionskräfte, dass die Haltenase der Pumpe in die Ringnut der Hinterschneidung hineingedrückt wird, so dass sich die Haltenase nicht aus der Ringnut lösen kann, obwohl kein spezielles Sicherungselement vorgesehen ist.

In bevorzugter Ausgestaltung der Erfindung ist vorgesehen, dass die Feder auf einem Stift sitzt, der an dem Pumpenkammergehäuse angebracht ist und eine Drehsicherung des Halteteils bildet. Das Halteteil ist somit nur längs des Stiftes von dem Pumpenkammergehäuse abhebbar bzw. auf dieses absenkbar. Um das Halteteil mit einer möglichst gleichförmigen Spannkraft gegen das Pumpenkammergehäuse zu spannen, sollten zumindest zwei oder mehr Federn auf das Halteteil einwirken, wobei die Federn vorzugsweise in Umfangsrichtung des Halteteils und der Pumpe insbesondere gleich verteilt angeordnet sein sollten. In bevorzugter Ausgestaltung der Erfindung sind vier Stifte über den Umfang des ringförmigen Halteteils gleich verteilt angeordnet, wobei jeder Stift eine Feder trägt.

Um die Pumpe auszubauen, muss die Haltenase aus der Hinterschneidung gelöst werden, was insbesondere dadurch geschieht, dass die Pumpe entgegen der Montagedrehung um ihre Pumpenachse soweit gedreht wird, bis die Haltenase aus der Hinterschneidung freikommt, woraufhin die Pumpe entnommen werden kann. Da die Pumpe üblicherweise sehr heiß ist, sind erfindungsgemäß an der Pumpe spezielle Kopplungselemente z.B. in Form von Eingriffsschlitzen vorgesehen, an denen ein Benutzer ein Entnahmewerkzeug anbringen kann, das vorzugsweise aus einem nur gering wärmeleitenden Material besteht. Mittels des Entnahmewerkzeugs kann der Benutzer die gewünschte Drehung der Pumpe herbeiführen und die Pumpe damit aus ihrem Eingriff mit dem Halteteil lösen. Anschließend kann der Benutzer die Pumpe mit Hilfe des Entnahmewerkzeugs aus der Lötvorrichtung herausheben. Es hat sich als vorteilhaft erwiesen, wenn die Kupplungselemente an einem außerhalb des Gehäuses der Lötvorrichtung angeordneten Flansch der Pumpe ausgebildet und somit von außen für den Benutzer leicht zugänglich sind. Auf diese Weise ist auch erreicht, dass der Benutzer einen möglichst großen Abstand von der heißen Lötflüssigkeit hält, wodurch die Verletzungsgefahr beim Auswechseln der Pumpe gering ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen schematischen Vertikalschnitt durch eine erfindungsgemäße Lötvorrichtung,
- Figur 2: eine vergrößerte Darstellung eines Details in Fig. 1,
- Figur 3: eine Aufsicht auf die Pumpe (rechte Hälfte) und den Schnitt III-III in Fig. 2 (linke Hälfte) mit der Pumpe im gelösten Zustand und
- Figur 4: eine Fig. 3 entsprechende Darstellung mit der Pumpe im Eingriffszustand.

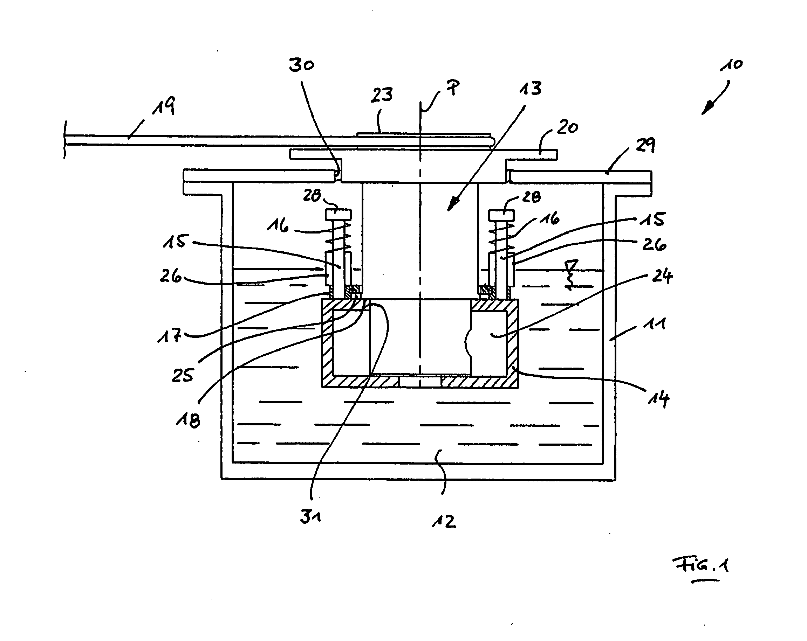

Die Fig. 1 bis 4 zeigen eine Lötvorrichtung 10 mit einem Behälter 11, der mittels eines Deckels 29 abgedeckt ist. Im Inneren des Behälters 11 befindet sich ein Bad einer Lötflüssigkeit 12, bei der es sich um heißes, verflüssigtes Zinn handeln kann. Innerhalb der Lötflüssigkeit 12 ist ein Pumpenkammergehäuse 14 angeordnet, das in nicht dargestellter Weise am Behälter 11 ortsfest abgestützt ist. Das Innere des Pumpenkammergehäuses 14 bildet eine Pumpenkammer 24, die mittels einer auf das Pumpenkammergehäuse 14 aufgesetzten und durch eine Öffnung 31 in die Pumpenkammer 24 hineinragenden Pumpe 13 unter einen Überdruck gesetzt werden kann, so dass die in der Pumpenkammer 24 befindliche Lötflüssigkeit in üblicher Weise zu einer nicht dargestellten Düse befördert werden kann.

Die Pumpe 13 durchdringt den Deckel 29 an einer Öffnung 30 und weist außenseitig des Behälters 11 und oberhalb des Deckels 29 einen Flansch 20 und eine Riemenscheibe 23 auf, um die ein Transmissionsriemen 19 verläuft, der darüber hinaus in nicht dargestellter weise mit einer Antriebseinheit verbunden ist. Alternativ ist es jedoch auch möglich, die Pumpe 13 unmittelbar mit einer Antriebseinheit auszustatten.

Die Pumpe 13 sitzt in auswechselbarer Weise auf dem Pumpenkammergehäuse 14. Am Pumpenkammergehäuse 14 sind mehrere, vorzugsweise mindestens drei sich vertikal nach oben erstreckende Stifte 15 befestigt, die über den Umfang der Öffnung 31 bzw. der Pumpe 13 gleichverteilt angeordnet sind und an ihrem oberen, dem Pumpenkammergehäuse 14 abgewandten Ende jeweils einen Kopf 28 aufweisen. Auf jedem Stift 15 sitzt eine Schraubenfeder 16, die sich mit ihrem einen Ende am Kopf 28 des Stiftes und mit ihrem entgegengesetzten Ende an einer verschieblich auf dem Stift 15 sitzenden Hülse 26 abstützt. Unmittelbar auf das Pumpenkammergehäuse 14 ist ein ringförmiges Halteteil 17 aufgelegt, das sich um die Pumpe 13 herum erstreckt und von den beiden Stiften 15 jeweils durchdrungen und dadurch drehfest auf dem Pumpenkammergehäuse 14 gehalten ist. Das Halteteil 17 ist auf seiner oberen, dem Pumpenkammergehäuse 14 abgewandeten Seite über die Hülsen 26 jeweils durch die Federn 16 belastet und gegen die Oberfläche des Pumpenkammergehäuse 14 gespannt. Entgegen der Kraft der Federn 16 kann das Halteteil 17 jedoch vom Pumpemkammergehäuse 14 abgehoben und längs der Stifte 15 verschoben werden.

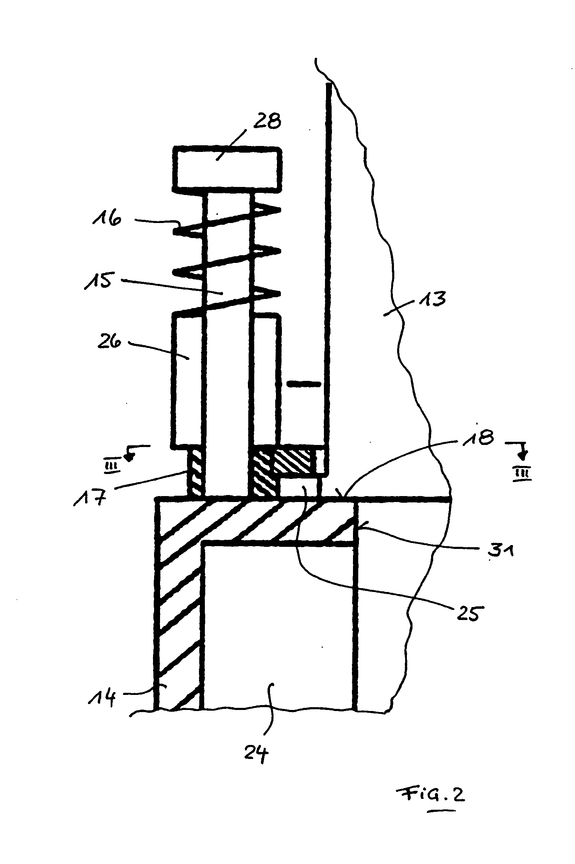

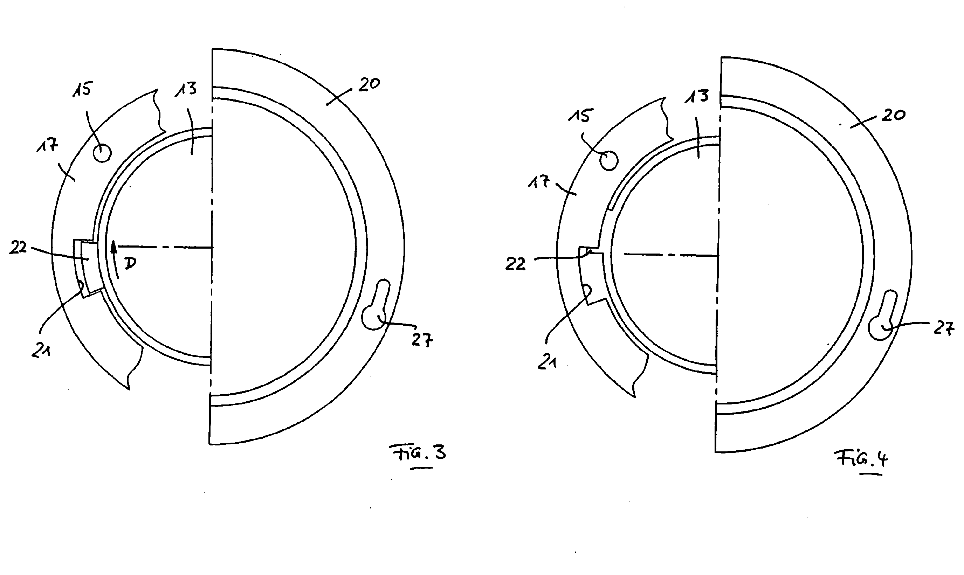

Wie insbesondere Fig. 2 zeigt, weist das ringförmige Halteteil 17 an seinem radial inneren Ende auf seiner Unterseite eine Aussparung 25 auf, die eine Hinterschneidung bildet. Die Aussparung 25 ist über eine Ausklinkung 21 (siehe Fig. 3) von der dem Pumpenkammergehäuse 14 abgewandten Oberseite des ringförmigen Halteteils 17 zugänglich.

Die Pumpe 13 weist zwei radial nach außen weisende Haltenasen 22 auf, die in ihren Außenabmessungen etwas kleiner als die Ausklinkungen 21 sind, so dass die Haltenasen 22 von oben in die Ausklinkungen 21 des ringförmigen Halteteils 17 eingesetzt werden können. Wenn die Pumpe 13 anschließend um ihre vertikale Pumpenachse P in Richtung des Pfeils D (siehe Fig. 3) gedreht wird, werden die Haltenasen 22 in der Aussparung 25 des ringförmigen Halteteils 17 verschoben und untergreifen somit das Halteteil 17, so dass die Pumpe nicht mehr vom Pumpenkammergehäuse 14 abgehoben werden kann.

An den Haltenasen 22 und/oder der oberen Begrenzungswand der Aussparung 25 des Halteteils 17 sind Schrägen oder Rampen ausgebildet, so dass die Haltenasen 22 bei Montagedrehung der Pumpe 13 in Richtung des Pfeils D zum Ausgleich eines etwaigen Spiels mit dem ringförmigen Halteteil 17 in Anlage kommen und das Halteteil 17 bei einer weiteren Drehung entgegen den Kräften der Federn 16 um ein geringes Maß von dem Pumpenkammergehäuse 14 abheben. Die Kräfte der Federn 16 wirken über die Hülsen 26 und das ringförmige Halteteil 17 auf die Haltenasen 22 der Pumpe 13 und spannen dadurch die Pumpe 13 mit einer Dichtfläche 18 in abgedichteter Weise über den Umfang der Öffnung 31 gegen die Oberseite des Pumpenkammergehäuse 14.

Innerhalb der Pumpe 13 dreht in üblicher Weise ein Rotor um die Pumpenachse P, wobei die Drehrichtung des Rotors um die Pumpenachse P der Richtung der Drehung der Pumpe um die Pumpenachse P zwecks ihrer Montage, d.h. der Montagedrehung in Richtung des Pfeils D entspricht. Auf diese Weise ist sichergestellt, dass bei Betrieb der Pumpe 13 auf die Pumpe bzw. das Pumpengehäuse eine Reaktionskraft wirkt, die die Haltenasen 22 in Eingriffrichtung mit der Aussparung 25 beaufschlagt und somit sicher in der Aussparung 25 hält.

Zum Auswechseln der Pumpe 13 wird diese entgegen ihrer Montagerichtung D um die Pumpenachse P gedreht, bis die Haltenasen 22 direkt unter den Ausklinkungen 21 des ringförmigen Halteteils 17 sitzen, so dass die Pumpe 13 nach oben herausgehoben werden kann. Damit der Benutzer die üblicherweise heiße Pumpe 13 nicht direkt berühren muss, sind in dem außerhalb des Behälters 11 angeordneten Flansch 20 zwei langlochartige Eingriffsöffnungen 27 vorgesehen, an denen der Benutzer ein Entnahmewerkzeug ansetzen und mit der Pumpe koppeln kann. Über das Entnahmewerkzeug lässt sich in einfacher Weise das zur Verdrehung der Pumpe 13 notwendige Drehmoment aufbringen und gleichzeitig kann die Pumpe 13 mittels des Entnahmewerkzeugs aus dem Behälter 11 herausgehoben werden.

## Patentansprüche

1. Lötvorrichtung (10) mit einem Behälter (11), in dem ein Bad einer Lötflüssigkeit (12), insbesondere Zinn, angeordnet ist, und mit einer Pumpe (13), mittels der die Lötflüssigkeit (12) unter Druck zumindest einer Düse zuführbar ist, wobei die Pumpe (13) auswechselbar auf einem Pumpenkammergehäuse (14) gehalten ist, **dadurch gekennzeichnet, dass** die Pumpe (13) zumindest eine Haltenase (22) aufweist, mit der sie in formschlüssigen Eingriff mit einer Hinterschneidung (25) eines am Pumpenkammergehäuse (14) gehaltenen Halteteils (17) bringbar ist, und dass das Halteteil (17) unter Wirkung von zumindest einer Feder (16) gegen das Pumpenkammergehäuse (14) gespannt ist.

2. Lötvorrichtung nach Anspruch 1, **dadurch gekennzeichnet, dass** die Feder (16) auf einem Stift (15) sitzt, der an dem Pumpenkammergehäuse (14) angebracht ist und eine Drehsicherung des Halteteils (17) bildet.

3. Lötvorrichtung nach Anspruch 1 oder 2, **dadurch gekennzeichnet, dass** zumindest drei Federn (14) auf das Halteteil (17) einwirken.

4. Lötvorrichtung nach einem der Ansprüche 1 bis 3, **dadurch gekennzeichnet, dass** eine Dichtfläche (18) der Pumpe (13) in dem mit dem Halteteil (17) in Eingriff stehenden Zustand mittels der zumindest einen Feder (16) gegen eine Oberfläche des Pumpenkammergehäuses (14) gespannt ist.

5. Lötvorrichtung nach einem der Ansprüche 1 bis 4, **dadurch gekennzeichnet, dass** die Pumpe (13) mittels einer Montagedrehung (D) um ihre Pumpenachse (P) mit dem Halteteil (17) in Eingriff bringbar ist.

6. Lötvorrichtung nach Anspruch 5, **dadurch gekennzeichnet, dass** die Richtung der Montagedrehung (D) der Drehrichtung der Pumpe (13) bei Betrieb entspricht.

7. Lötvorrichtung nach einem der Ansprüche 1 bis 6, **dadurch gekennzeichnet, dass** die Pumpe (13) Kopplungselemente (27) zur Anbringung eines Entnahmewerkzeugs aufweist.

8. Lötvorrichtung nach Anspruch 7, **dadurch gekennzeichnet, dass** die Kopplungselemente (27) an einem außerhalb des Behälters (11) angeordneten Flansch (20) der Pumpe (13) ausgebildet sind.

9. Lötvorrichtung nach einem der Ansprüche 1 bis 8, **dadurch gekennzeichnet, dass** die Pumpe (13) zumindest zwei Haltenasen (22) aufweist.

10. Lötvorrichtung nach Anspruch 9, **dadurch gekennzeichnet, dass** drei Haltenasen (22) vorgesehen sind, die über den Umfang gleichverteilt angeordnet sind.

## Claims

1. Soldering apparatus (10) having a holder (11) in which a bath of soldering liquid (12), in particular tin, is arranged, and having a pump (13), by means of which the soldering liquid (12) is feedable under pressure to at least one nozzle, wherein the pump (13) is held exchangeably on a pump chamber housing (14), **characterized in that** the pump (13) has at least one retaining lug (22), by way of which it can be brought into formfitting engagement with an undercut (25) of a retaining part (17) retained on the pump chamber housing (14), and **in that** the retaining part (17) is clamped against the pump chamber housing (14) under the action of at least one spring (16).

2. Soldering apparatus according to Claim 1, **characterized in that** the spring (16) is fitted on a pin (15) which is attached to the pump chamber housing (14) and forms a rotation-prevention means for the retaining part (17).

3. Soldering apparatus according to Claim 1 or 2, **characterized in that** at least three springs (14) act on the retaining part (17).

4. Soldering apparatus according to one of Claims 1 to 3, **characterized in that** a sealing surface (18) of the pump (13) is clamped by means of the at least one spring (16) against a surface of the pump chamber housing (14) in the state in engagement with the retaining part (17).

5. Soldering apparatus according to one of Claims 1 to 4, **characterized in that** the pump (13) can be brought into engagement with the retaining part (17) by means of a mounting rotation (D) about its pump axis (P).

6. Soldering apparatus according to Claim 5, **characterized in that** the direction of the mounting rotation (D) corresponds to the direction of rotation of the pump (13) during operation.

7. Soldering apparatus according to one of Claims 1 to 6, **characterized in that** the pump (13) has coupling elements (27) for the attachment of a removal tool.

8. Soldering apparatus according to Claim 7, **characterized in that** the coupling elements (27) are formed on a flange (20) of the pump (13), said flange (20) being arranged outside the container (11).

9. Soldering apparatus according to one of Claims 1 to 8, **characterized in that** the pump (13) has at least two retaining lugs (22).

10. Soldering apparatus according to Claim 9, **characterized in that** there are provided three retaining lugs (22), which are arranged in a manner distributed regularly around the circumference.

## Revendications

1. Dispositif de brasage (10) doté d'un récipient (11) dans lequel un bain de liquide de brasage (12), notamment de l'étain, est disposé, et d'une pompe (13) à l'aide de laquelle le liquide de brasage (12) peut être amené sous pression à au moins une buse, la pompe (13) étant maintenue de façon remplaçable sur un carter de chambre de pompe (14), **caractérisé en ce que** la pompe (13) comporte au moins un bec d'arrêt (22) à l'aide duquel elle peut être maintenue en prise par complémentarité de formes avec un détouré arrière (25) de pièce d'arrêt (17) maintenu au niveau du carter de chambre de pompe (14) et que la pièce d'arrêt (17) est tendue contre le carter de chambre de pompe (14) sous l'effet d'au moins un ressort (16).

2. Dispositif de brasage selon la revendication 1, **caractérisé en ce que** le ressort (16) est assis sur une tige (15) disposée au niveau du carter de chambre de pompe (14) et forme une protection antirotation de la pièce d'arrêt (17).

3. Dispositif de brasage selon la revendication 1 ou 2, **caractérisé en ce qu'**au moins trois ressorts (14) agissent sur la pièce d'arrêt (17).

4. Dispositif de brasage selon l'une quelconque des revendications 1 à 3, **caractérisé en ce qu'**une surface étanche (18) de la pompe (13) est tendue contre une surface du carter de chambre de pompe (14) à l'état placé en prise avec la pièce d'arrêt (17) à l'aide de l'au moins un ressort (16).

5. Dispositif de brasage selon l'une quelconque des revendications 1 à 4, **caractérisé en ce que** la pompe (13) peut être amenée en prise avec la pièce d'arrêt (17) par le biais d'une rotation de montage (D) effectuée autour de son axe de pompe (P).

6. Dispositif de brasage selon la revendication 5, **caractérisé en ce que** la direction de la rotation de montage (D) correspond à la direction de rotation de la pompe (13) en fonctionnement.

7. Dispositif de brasage selon l'une quelconque des revendications 1 à 6, **caractérisé en ce que** la pompe (13) comporte des éléments de couplage (27) permettant de mettre en place un outil de retrait.

8. Dispositif de brasage selon la revendication 7, **caractérisé en ce que** les éléments de couplage (27) sont réalisés au niveau d'une bride (20) de la pompe (13) disposée à l'extérieur du récipient (11).

9. Dispositif de brasage selon l'une quelconque des revendications 1 à 8, **caractérisé en ce que** la pompe (13) comporte au moins deux becs d'arrêt (22).

10. Dispositif de brasage selon la revendication 9, **caractérisé en ce que** trois becs d'arrêt (22) disposés de façon régulière sur l'ensemble de la circonférence sont prévus.
